# EUROPEAN PATENT APPLICATION

(11) **EP 1 887 193 A2**
(43) Date of publication of application: **13.02.2008**
(21) Application number: 07015029.7
(22) Date of filing: 31.07.2007
(51) Int. Cl.: F01N 3/08, F02D 41/02, F02D 41/40

(54) **Exhaust gas purification system and method for internal combustion engine**

(30) Priority: 01.08.2006 JP 2006210160
(71) Applicant: TOYOTA JIDOSHA KABUSHIKI KAISHA, Toyota-shi, Aichi-ken, 471-8571 (JP)
(72) Inventor: Oba, Takahiro, Toyota-shi Aichi-ken 471-8571 (JP); Takimoto, Katsushi, Toyota-shi Aichi-ken 471-8571 (JP); Negami, Akihiko, Toyota-shi Aichi-ken 471-8571 (JP)
(74) Representative: Kuhnen & Wacker

(57) **Abstract**

An exhaust gas purification system for an internal combustion engine includes rich spike execution means for executing rich spike control in which the air-fuel ratio of an exhaust gas flowing into an NOx storage reduction catalyst is lowered to a target rich air-fuel ratio by supplying fuel to the exhaust gas while reducing oxides stored in the NOx storage reduction catalyst. The rich spike execution means executes the rich spike control (S 108) when the fuel injection amount has increased at a predetermined fuel increase rate or more by a predetermined fuel increase amount or more (S102, S105). It is possible to restrict the excessive amount of fuel to be supplied to the exhaust gas in rich spike control, and to sufficiently reduce oxides stored in the NOx storage reduction catalyst.

## Description

### BACKGROUND OF THE INVENTION

### 1. Field of the Invention

The present invention relates to an exhaust gas purification system and method for an internal combustion engine including an NOx storage reduction catalyst provided in an exhaust passage.

### 2. Description of Related Art

In exhaust gas purification systems for internal combustion engines including an NOx storage reduction catalyst (hereinafter simply referred to as "NOx catalyst"), a so-called rich spike control is occasionally performed to reduce oxides stored in the NOx catalyst such as NOx and SOx. In the rich spike control, fuel is intermittently supplied to the exhaust gas, so that the air-fuel ratio of the exhaust gas flowing into the NOx catalyst is lowered to a target rich air-fuel ratio repetitively at relatively short periods.

Japanese Patent Application Publication No. 2002-195026 (JP-A-2002-195026) describes a technique to determine the timing to execute rich spike control to reduce NOx stored in an NOx catalyst, and the amount of fuel to be supplied to the NOx catalyst in the rich spike control, based on the amount of NOx and SOx stored in the NOx catalyst.

In the rich spike control, the air-fuel ratio of the exhaust gas flowing into the NOx catalyst is lowered to the target rich air-fuel ratio. In order to achieve that, it is necessary to supply a larger amount of fuel to the exhaust gas as the air-fuel ratio of the exhaust gas at the time of the rich spike control is higher. If the amount of fuel to be supplied to the exhaust gas is insufficient in the rich spike control, the air-fuel ratio of the exhaust gas flowing into the NOx catalyst may not be lowered to the target rich air-fuel ratio, and as a result, the oxides stored in the NOx catalyst may not be sufficiently reduced.

### SUMMARY OF THE INVENTION

The invention provides a technique to restrict the excessive amount of fuel to be supplied to an exhaust gas in rich spike control, and to sufficiently reduce oxides stored in an NOx catalyst.

In an aspect of the present invention, the rich spike control for reducing oxides stored in the NOx catalyst is executed when the increase rate of the fuel injection amount is at or above a predetermined increase rate and the increase amount thereof is equal to or above a predetermined fuel increase amount.

More specifically, an exhaust gas purification system for an internal combustion engine in accordance with an aspect of the present invention includes: an NOx storage reduction catalyst provided in an exhaust passage of the internal combustion engine; fuel supply means for supplying fuel to an exhaust gas at a position upstream of the NOx storage reduction catalyst; and rich spike execution means for executing a rich spike control in which an air-fuel ratio of the exhaust gas flowing into the NOx storage reduction catalyst is lowered to a target rich air-fuel ratio by supplying fuel to the exhaust gas by means of the fuel supply means, and the rich spike execution means executes the rich spike control when the fuel injection amount is increased by at least a predetermined fuel increase amount at at lease a predetermined fuel increase rate.

The target rich air-fuel ratio is an air-fuel ratio at which oxides stored in the NOx catalyst are reduced, and may be determined in advance for the respective oxides to be reduced.

When the internal combustion engine is accelerated, the fuel injection amount is increased. When the fuel injection amount increases rapidly and greatly, the air-fuel ratio of the exhaust gas is temporarily lowered. In other words, the air-fuel ratio of the exhaust gas before execution of the rich spike control (hereinafter referred to as "base air-fuel ratio") is temporarily lowered.

As the base air-fuel ratio is lower, a smaller amount of fuel is needed to further lower the air-fuel ratio of the exhaust gas to the target rich air-fuel ratio. Therefore, it is possible to reduce the amount of fuel that needs to be supplied to the exhaust gas in the rich spike control by executing the rich spike control supplying fuel to the exhaust gas when base air-fuel ratio is lowered.

The increase rate of the fuel injection amount refers to the amount by which the fuel injection amount is increased per unit time. The predetermined fuel increase rate and the predetermined fuel increase amount are thresholds for determining that the fuel injection amount in the internal combustion engine has increased rapidly enough for the base air-fuel ratio of the exhaust gas to be temporarily lowered sufficiently. In other words, when the fuel injection amount in the internal combustion engine has increased by at least the predetermined fuel increase amount at at least the predetermined fuel increase rate, the base air-fuel ratio of the exhaust gas is locally so low that the air-fuel ratio of the exhaust gas flowing into the NOx catalyst may be lowered to the target rich air-fuel ratio, using a reduded amount of fuel supplied from the fuel supply means in rich spike control.

In order to decrease the amount of fuel to be supplied to the exhaust gas in rich spike control, it is conceivable to directly detect the air-fuel ratio of the exhaust gas by means of an air-fuel ratio sensor, and to execute rich spike control when a detected value is lowered. However, lowering of the base air-fuel ratio of the exhaust gas due to a rapid increase in the fuel injection amount in the internal combustion engine is temporary. Therefore, if the rich spike control is executed after the air-fuel ratio sensor has detected lowering of the base air-fuel ratio, there may be a delay in timing for the fuel supply means to supply fuel to the exhaust gas. In other words, it may be difficult for the fuel supply means to supply fuel to the exhaust gas while its base air-fuel ratio is lowered.

In the aspect of the present invention, rich spike control is executed when the fuel injection amount in the internal combustion engine is increased by at least the predetermined fuel increase amount at at least the predetermined fuel increase rate. In other words, rich spike control is executed based on changes in fuel injection amount in the internal combustion engine. Therefore, fuel can be supplied to the exhaust gas at a more suitable timing, by means of the fuel supply means. That is, fuel can be more reliably supplied to the exhaust gas while its base air-fuel ratio is lowered, by means of the fuel supply means. Therefore, the air-fuel ratio of the exhaust gas flowing into the NOx catalyst can be more reliably lowered to the target rich air-fuel ratio.

Thus, according to the aspect of the present invention, it is possible to restrict the excessive amount of fuel to be supplied to the exhaust gas in rich spike control, and to sufficiently reduce oxides stored in the NOx catalyst.

As the intake air amount of the internal combustion engine is larger, the base air-fuel ratio of the exhaust gas is more difficult to lower. Therefore, in the above aspect of the present invention, the predetermined fuel increase amount may be set to be larger as the intake air amount of the internal combustion engine is larger.

This makes it possible to more reliably restrict the excessive amount of fuel to be supplied to the exhaust gas in rich spike control. In addition, the air-fuel ratio of the exhaust gas flowing into the NOx catalyst can be more reliably lowered to the target rich air-fuel ratio.

In the aspect of the present invention, rich spike control may be executed when the increase rate of the intake air amount of the internal combustion engine is equal to or less than a predetermined air increase rate and the integrated amount of the increase amount of the fuel injection amount in the internal combustion engine within a predetermined time has totaled to at least a predetermined integrated amount.

Even if the fuel injection amount in the internal combustion engine does not increase rapidly and greatly, if the flow rate of the exhaust gas does not increase rapidly, the fuel injection amount in the internal combustion engine is increased little by little repetitively within a certain period, so that the base air-fuel ratio of the exhaust gas may be temporarily lowered by the integrated amount of the increase amount of the fuel injection amount. This also causes the base air-fuel ratio of the exhaust gas to be locally lowered.

The increase rate of the intake air amount refers to an increase amount of the intake air amount per unit time. The predetermined air increase rate is a threshold for determining that, with the increase rate of the intake air amount of the internal combustion engine equal to or lower than the predetermined air increase rate, the base air-fuel ratio of the exhaust gas is locally lowered in the manner described above, even if the fuel injection amount in the internal combustion engine does not increase rapidly.

The predetermined time and the predetermined integrated amount are thresholds for determining that, with the increase rate of the intake air amount of the internal combustion engine equal to or less than the predetermined air increase rate, and with the integrated amount of the increase amount of the fuel injection amount in the internal combustion engine within a predetermined time having totaled to at least the predetermined integrated amount, the base air-fuel ratio of the exhaust gas is temporarily lowered to about the same level as when the fuel injection amount in the internal combustion engine has increased rapidly as described above.

According to the above aspect, the rich spike control may be executed even if the fuel injection amount has not increased rapidly. It is possible to restrict the excessive amount of fuel to be supplied to the exhaust gas in this rich spike control, and to sufficiently reduce oxides stored in the NOx catalyst.

As discussed above, as the intake air amount of the internal combustion engine is larger, the base air-fuel ratio of the exhaust gas is more difficult to lower. Therefore, in the above aspect, the predetermined integrated amount may be set to be larger as the intake air amount of the internal combustion engine is larger.

This aspect makes it possible to more reliably restrict the excessive amount of fuel to be supplied to the exhaust gas in rich spike control. In addition, the air-fuel ratio of the exhaust gas flowing into the NOx catalyst can be more reliably lowered to the target rich air-fuel ratio.

In an aspect of the present invention, assuming that the fuel injection amount is an amount of fuel injected in primary fuel injection, the rich spike control may be executed when the primary fuel injection amount is increased by at least a predetermined fuel increase amount at at least a predetermined fuel increase rate. If the intake air amount of the internal combustion engine is equal to or more than a predetermined air amount, secondary fuel injection may be executed at a timing later than the primary fuel injection such that the fuel injected by the secondary fuel injection is combusted.

Lowering of the base air-fuel ratio of the exhaust gas due to a rapid increase of the primary fuel injection amount is temporary. At this time, as the intake air amount of the internal combustion engine is larger, that is, the flow rate of the exhaust gas is larger, the period for which the base air-fuel ratio is lowered is shorter. If the period for which the base air-fuel ratio is lowered is short, it is difficult to supply fuel to the exhaust gas while its base air-fuel ratio is lowered, by means of the fuel supply, during rich spike control.

The predetermined air amount is a threshold for determining that, with the intake air amount of the internal combustion engine equal to or more than the predetermined air amount, the period for which the base air-fuel ratio is lowered is so short that it is difficult to supply fuel to the exhaust gas while its base air-fuel ratio is lowered, by means of the fuel supply means, during rich spike control.

Thus, according to the above aspect, the air-fuel ratio of the exhaust gas to be supplied to the NOx catalyst can be more reliably lowered to the target rich air-fuel ratio during execution of rich spike control.

According to an aspect of the present invention, it is possible to restrict the excessive amount of fuel to be supplied to the exhaust gas in rich spike control, and to sufficiently reduce oxides stored in the NOx catalyst.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a diagram showing the configuration outline of an internal combustion engine and its intake and exhaust systems in accordance with an embodiment of the present invention;
FIG. 2 shows the relation between changes in primary fuel injection amount and the base air-fuel ratio of an exhaust gas; and
FIG. 3 is a flowchart illustrating a routine for NOx reduction control in accordance with the embodiment.

### DETAILED DESCRIPTION OF THE EMBODIMENTS

An embodiment of the present invention will be described with reference to the drawings. It should be noted that in the drawings, the same reference numerals denote the same or equivalent components.

### <Configuration outline of internal combustion engine and its intake and exhaust systems>

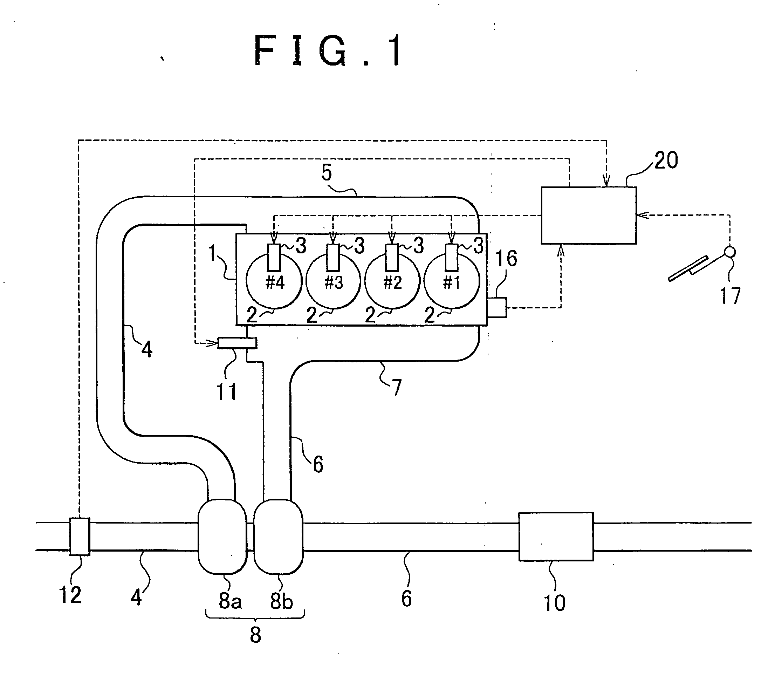

FIG. 1 is a diagram showing the configuration outline of an internal combustion engine and its intake and exhaust systems in accordance with an embodiment of the present invention. An internal combustion engine 1 is a diesel engine for driving a vehicle, and has four cylinders 2. A fuel injection valve 3 is provided to each cylinder 2 to directly inject fuel into the cylinder 2.

An intake manifold 5 and an exhaust manifold 7 are connected to the internal combustion engine 1. An end of an intake passage 4 is connected to the intake manifold 5. An end of an exhaust passage 6 is connected to the exhaust manifold 7. In this embodiment, the exhaust passage 6 is connected to a position of the exhaust manifold 7 in the vicinity of the #4 cylinder.

A compressor 8a of a turbocharger (supercharger) 8 is provided in the intake passage 4. A turbine 8b of the turbocharger 8 is provided in the exhaust passage 6. An air flow meter 12 is provided at a position of the intake passage 4 upstream of the compressor 8a. An NOx catalyst 10 is provided at a position of the exhaust passage 6 downstream of the turbine 8b.

A fuel addition valve 11 for adding fuel to an exhaust gas as a reducing agent is provided at a position of the exhaust manifold 7 in the vicinity of the connection with the exhaust passage 6. In this embodiment, the fuel addition valve 11 may be regarded as the fuel supply means of the present invention.

An electronic control unit (ECU) 20 is also provided in the internal combustion engine 1. The ECU 20 controls the operating state of the internal combustion engine 1. The air flow meter 12, a crank position sensor 16, and an accelerator opening sensor 17 are electrically connected to the ECU 20. The crank position sensor 16 detects the crank angle of the internal combustion engine 1. The accelerator opening sensor 17 detects the accelerator opening of the vehicle incorporating the internal combustion engine 1. Output signals from the respective sensors above are input to the ECU 20.

The ECU 20 derives the rotational speed of the internal combustion engine 1 based on the detection value of the crank position sensor 16, and derives the load on the internal combustion engine 1 based on the detection value of the accelerator opening sensor 17.

The fuel injection valve 3 and the fuel addition valve 11 are also electrically connected to the ECU 20. The ECU 20 control these valves.

### <NOx control>

In this embodiment of the present invention, rich spike control is executed in NOx reduction control for reducing NOx stored in the NOx catalyst 10. In the rich spike control in accordance with the present invention, fuel is intermittently supplied from the fuel addition valve 11 to the exhaust gas, so that the air-fuel ratio of the exhaust gas flowing into the NOx catalyst 10 is lowered to a target rich air-fuel ratio repetitively at relatively short periods. The target rich air-fuel ratio is an air-fuel ratio at which NOx stored in the NOx catalyst 10 can be reduced, and determined in advance through experiments or the like. In this embodiment, NOx may be regarded as the oxide of the present invention.

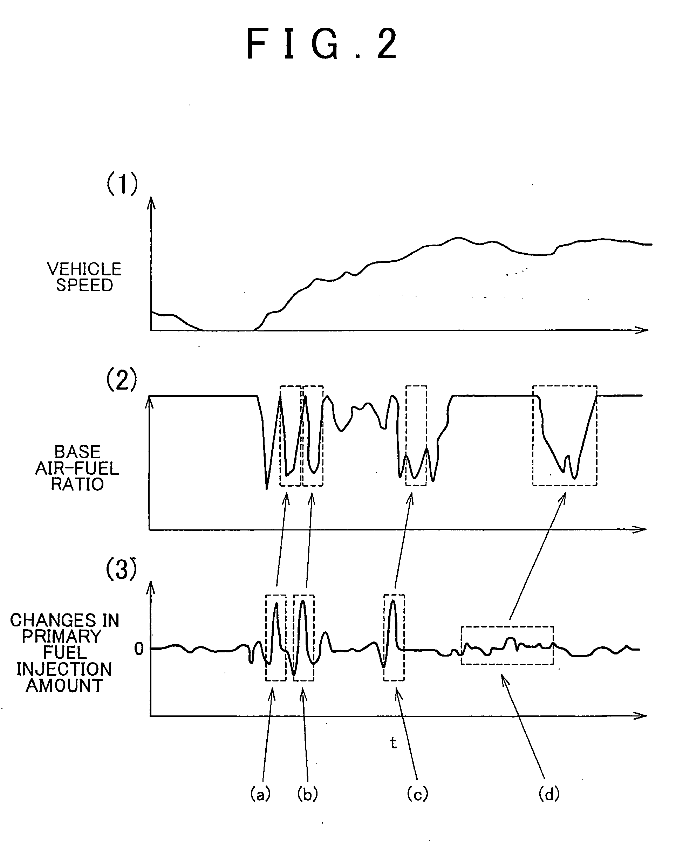

In lowering the air-fuel ratio of the exhaust gas to the target rich air-fuel ratio by executing the rich spike control, it is necessary to add a larger amount of fuel from the fuel addition valve 11 as the base air-fuel ratio of the exhaust gas is higher. FIG. 2 shows the relation between changes in primary fuel injection amount and the base air-fuel ratio of the exhaust gas. In FIG. 2, the chart (1) shows a transition in a vehicle speed, the chart (2) shows a transition in base air-fuel ratio of the exhaust gas, and the chart (3) shows a transition in changes in primary fuel injection in the internal combustion engine 1.

Immediately after the primary fuel injection amount increases rapidly and greatly, as indicated by (a), (b) and (c) in the chart (3) of FIG. 2, the base air-fuel ratio of the exhaust gas temporarily lowers, as shown in the chart (2) of FIG. 2. This causes the base air-fuel ratio of the exhaust gas to be locally lowered. Even in the case where the primary fuel injection amount does not increase rapidly, as indicated by (d) in the chart (3) of FIG. 2, if the primary fuel injection amount is increased little by little repetitively, with the intake air amount of the internal combustion engine 1 not increased rapidly, that is, with the flow rate of the exhaust gas not increased rapidly, and if the integrated amount of the increase amount of the primary fuel injection amount totals to a certain amount within a certain time, the base air-fuel ratio is temporarily lowered to about the same level as in the case where the primary fuel injection amount has increased rapidly.

In the NOx reduction control in accordance with this embodiment, the rich spike control is executed when the primary fuel injection amount has changed as indicated by (a), (b), (c) and (d) in the chart (3) of FIG. 2, that is, when the base air-fuel ratio of the exhaust gas is locally lowered.

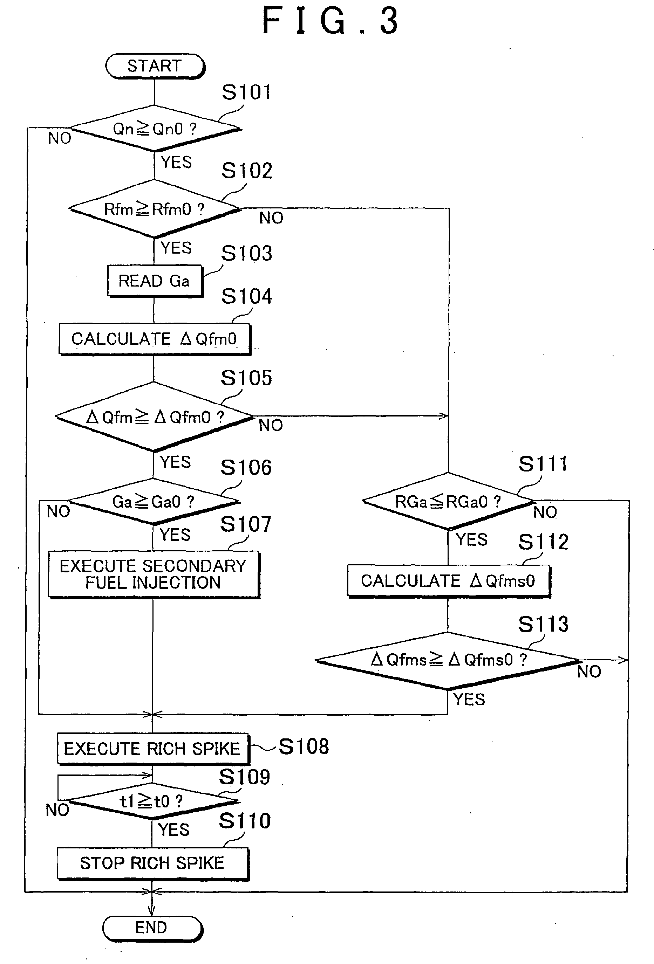

A routine for the NOx reduction control in accordance with this embodiment is described with reference to FIG. 3. The routine is stored in advance in the ECU 20, and executed periodically at predetermined intervals during operation of the internal combustion engine 1.

First, in S 101 of this routine, the ECU 20 determines whether the NOx storage amount Qn in the NOx catalyst 10 is equal to or greater than a predetermined storage amount Qn0. The predetermined storage amount Qn0 is a threshold for starting execution of the NOx reduction control, and may be determined in advance through experiments or the like. If the determination is positive in S101, the ECU 20 proceeds to S 102, and if the determination is negative, the ECU 20 temporarily ends the execution of this routine.

In S102, the ECU 20 determines whether the increase rate Rfm of the primary fuel injection amount is equal to or exceeds than a predetermined fuel increase rate Rfm0. The increase rate Rfm of the primary fuel injection amount refers to the amount by which the primary fuel injection amount is increased per unit time. If the determination is positive in S 102, the ECU 20 proceeds to S103, and if the determination is negative, the ECU 20 proceeds to S111. The predetermined fuel increase rate Rfm0 will be discussed later.

In S103, the ECU 20 reads an intake air amount Ga detected by the air flow meter 12.

Then, the ECU 20 proceeds to S 104, and calculates a predetermined fuel increase amount ΔQfm0 based on the intake air amount Ga.

The predetermined fuel increase rate Rfm0 and the predetermined fuel increase amount ΔQfm0 are thresholds for determining that the primary fuel injection amount has increased rapidly enough for the base air-fuel ratio to be temporarily lowered sufficiently. In other words, if the primary fuel injection amount has increased by at least the predetermined fuel increase amount ΔQfm0 at at least the predetermined fuel increase rate Rfm0, the base air-fuel ratio of the exhaust gas is locally so low that the air-fuel ratio of the exhaust gas flowing into the NOx catalyst 10 may be lowered to the target rich air-fuel ratio, using a reduced amount of fuel supplied from the fuel addition valve 11 in the rich spike control.

The relation between the intake air amount Ga and the predetermined fuel increase amount ΔQfm0 is stored in advance as a map in the ECU 20. In this map, the predetermined fuel increase amount ΔQfm0 is increased as the intake air amount Ga increases.

Then, the ECU 20 proceeds to S105, and determines whether the increase amount ΔQfm of the primary fuel injection amount is equal to or more than the predetermined fuel increase amount ΔQfm0. If the determination is positive in S105, the ECU 20 proceeds to S106, and if the determination is negative, the ECU 20 proceeds to S111.

In S106, the ECU 20 determines whether the intake air amount Ga is equal to or exceeds a predetermined air amount Ga0.

If the primary fuel injection amount is increased by at least the predetermined fuel increase amount ΔQfm0 at at least the predetermined fuel increase rate Rfm0, it may be determined that the base air-fuel ratio is temporarily lowered sufficiently. However, such lowering of the base air-fuel ratio due to a rapid increase in the primary fuel injection amount is temporary. In addition, the period for which the base air-fuel ratio is lowered is shorter as the intake air amount is larger, that is, the flow rate of the exhaust gas is higher. If the period during which the base air-fuel ratio is lowered is short, it is difficult to add fuel to the exhaust gas while its base air-fuel ratio is lowered during the rich spike control.

If the intake air amount of the internal combustion engine 1 is equal to or more than the predetermined air amount Ga0, the period for which the base air-fuel ratio is lowered is so short that it is difficult to add fuel to the exhaust gas while its base air-fuel ratio is lowered, by means of the fuel addition valve 11, during the rich spike control. The predetermined air amount Ga0 is a threshold for determining that such a state is established.

If the determination is positive in S106, the ECU 20 proceeds to S107, and if the determination is negative, the ECU 20 proceeds to S108.

In S 107, the ECU 20 executes secondary fuel injection by means of the fuel injection valve 3 some time after the primary fuel injection such that the fuel injected by the secondary fuen injection is combusted. Then, the ECU 20 proceeds to S108.

In S108, the ECU 20 executes the rich spike control. That is, the fuel addition valve 11 is caused to execute addition of fuel. At this time, the amount of fuel added from the fuel addition valve 11 is controlled to bring the air-fuel ratio of the exhaust gas to the target rich air-fuel ratio.

Then, the ECU 20 proceeds to S109, and determines whether or not the elapsed time t1 since the start of the rich spike control is equal to or longer than a predetermined time t0. The predetermined time t0 is a time allowing determination that NOx stored in the NOx catalyst 10 is sufficiently reduced, and determined in advance through experiments or the like. If the determination is positive in S109, the ECU 20 proceeds to S110, and if the determination is negative, the ECU 20 repeats S109.

In S 110, the ECU 20 stops the execution of the rich spike control. That is, the fuel addition valve 11 is caused to stop the addition of fuel. In the case where secondary fuel injection is executed by the fuel injection valve 3, the execution of the secondary fuel injection is also stopped. After that, the ECU 20 temporarily ends the execution of this routine.

Meanwhile, in S111, the ECU 20 determines whether or not the increase rate RGa of the intake air amount of the internal combustion engine 1 is equal to or less than a predetermined air increase rate RGa0.

The increase rate RGa of the intake air amount refers to an increase amount of the intake air amount per unit time. Even in the case where the primary fuel injection amount does not increase rapidly and greatly, if the increase rate RGa of the intake air amount is equal to or less than the predetermined air increase rate RGa0, the primary fuel injection amount is increased repetitively within a certain time, so that the base air-fuel ratio is temporarily lowered by the integrated amount ΔQfms of the increase amount ΔQfm of the primary fuel injection amount. That is, the predetermined air increase rate RGa0 is a threshold for determining that the base air-fuel ratio of the exhaust gas is locally lowered.

If the determination is positive in S111, the ECU 20 proceeds to S 112, and if the determination is negative, the ECU 20 temporarily ends the execution of this routine.

In S 112, the ECU 20 calculates a predetermined integrated amount ΔQfms0 based on the intake air amount Ga.

In the case where the increase rate of the intake air amount is equal to or less than the predetermined air increase rate RGa0, if the integrated amount of the increase amount ΔQfm of the primary fuel injection amount within a predetermined time is equal to or more than the predetermined integrated amount ΔQfms0, the base air-fuel ratio is temporarily lowered to about the same level as in the case where the primary fuel injection amount has increased rapidly discussed above. The predetermined integrated amount ΔQfms0 is a threshold for determining that such a state has been established.

The relation between the intake air amount Ga and the predetermined integrated amount ΔQfms0 is stored in advance as a map in the ECU 20. In this map, the predetermined integrated amount ΔQfms0 is larger as the intake air amount Ga is larger.

Then, the ECU 20 proceeds to S113, and determines whether or not the integrated amount ΔQfms of the increase amount ΔQfm of the primary fuel injection amount within a predetermined time is equal to or more than the predetermined integrated amount ΔQfms0. If the determination is positive in S113, the ECU 20 proceeds to S108, and if the determination is negative, the ECU 20 temporarily ends the execution of this routine.

According to the routine described above, the rich spike control is executed when the primary fuel injection amount has increased at the predetermined fuel increase rate Rfm0 or more by the predetermined fuel increase amount ΔQfm0 or more. This allows the fuel addition valve 11 to execute addition of fuel when the base air-fuel ratio of the exhaust gas is lowered. Therefore, the air-fuel ratio of the exhaust gas to be supplied to the NOx catalyst 10 may be lowered to the target rich air-fuel ratio with addition of a smaller amount of fuel.

In this embodiment, the rich spike control is executed when the primary fuel injection amount has changed as described above, rather than when the air-fuel ratio of the exhaust gas is directly detected by an air-fuel ratio sensor. This makes it possible to restrict the delay in timing for the fuel addition valve 11 to execute addition of fuel. In other words, fuel can be more reliably added to the exhaust gas by means of the fuel addition valve 11 while its base air-fuel ratio is lowered. Therefore, the air-fuel ratio of the exhaust gas flowing into the NOx catalyst 10 can be more reliably lowered to the target rich air-fuel ratio.

Thus, according to the NOx reduction control of this embodiment, it is possible to restrict the addition of an excessive amount of fuel from the fuel addition valve 11 in the rich spike control, and to sufficiently reduce NOx stored in the NOx catalyst 10.

According to the above routine, the rich spike control is executed, and secondary fuel injection is executed in the internal combustion engine 1, when the primary fuel injection amount is increased by at least the predetermined fuel increase amount ΔQfm0 at the predetermined fuel increase rate Rfm0, and when the intake air amount of the internal combustion engine 1 is equal to or more than the predetermined air amount Ga0. By executing a secondary fuel injection, the period for which the base air-fuel ratio of the exhaust gas is lowered is increased. Therefore, it is easier for the fuel addition valve 11 to add fuel to the exhaust gas while the base air-fuel ratio of the exhaust gas is lowered in the rich spike control.

Thus, the air-fuel ratio of the exhaust gas to be supplied to the NOx catalyst 10 may be more reliably lowered to the target rich air-fuel ratio during execution of the rich spike control, even when the intake air amount of the internal combustion engine 1 is large.

According to the above routine, the rich spike control is executed when the increase rate of the intake air amount of the internal combustion engine 1 is equal to or less than the predetermined air increase rate RGa0, and the integrated amount ΔQfms of the increase amount ΔQfm of the primary fuel injection amount within a predetermined time is equal to or more than the predetermined integrated amount ΔQfms0. This also allows the fuel addition valve 11 to execute addition of fuel when the base air-fuel ratio of the exhaust gas is lowered, as in the case where the primary fuel injection amount has increased rapidly. Therefore, the air-fuel ratio of the exhaust gas to be supplied to the NOx catalyst 10 may be lowered to the target rich air-fuel ratio by the addition of a smaller amount of fuel.

In this case, the rich spike control is executed based on the integrated amount of the primary fuel injection amount, rather than the air-fuel ratio of the exhaust gas is directly detected by an air-fuel ratio sensor. This makes it possible to more reliably add fuel to the exhaust gas by means of the fuel addition valve 11 while its base air-fuel ratio is lowered, and hence to more reliably lower the air-fuel ratio of the exhaust gas flowing into the NOx catalyst 10 to the target rich air-fuel ratio, as in the above case.

Thus, if the primary fuel injection amount has not increased rapidly, it is possible to restrict the excessive amount of fuel added from the fuel addition valve 11 in the rich spike control, and to sufficiently reduce NOx stored in the NOx catalyst 10.

According to the above routine, the predetermined fuel increase amount ΔQfm0 and the predetermined integrated amount ΔQfms0 are increased as the intake air amount of the internal combustion engine increases. This makes it possible to more reliably restrict the addition of an excessive amount of fuel from the fuel addition valve 11 in the rich spike control. In addition, the air-fuel ratio of the exhaust gas flowing into the NOx catalyst 10 is more reliably lowered to the target rich air-fuel ratio.

The method of executing the rich spike control in accordance with this example may be applied also be used in an SOx poisoning recovery control that is performed to reduce SOx stored in the NOx catalyst 10.

The rich spike control may be achieved in the internal combustion engine 1 by executing a secondary fuel injection by means of the fuel injection valve 3 some time after the primary fuel injection such that the fuel injected by the secondary fuel injection is not coombusted but discharged from the cylinder, rather than by adding fuel to the exhaust gas by means of the fuel addition valve 11.

## Claims

1. An exhaust gas purification system for an internal combustion engine, comprising:
an NOx storage reduction catalyst (10) provided in an exhaust passage of the internal combustion engine;
fuel supply means (11) for supplying fuel to an exhaust gas at a position upstream of the NOx storage reduction catalyst; and
rich spike execution means (20) for executing a rich spike control, in which an air-fuel ratio of the exhaust gas flowing into the NOx storage reduction catalyst is lowered to a target rich air-fuel ratio, by supplying fuel to the exhaust gas by means of the fuel supply means to reduce oxides stored in the NOx storage reduction catalyst,
wherein the rich spike execution means (20) executes the rich spike control when a fuel injection amount is increased by at least a predetermined fuel increase amount at a predetermined fuel increase rate.

2. The exhaust gas purification system according to claim 1, wherein the predetermined fuel increase amount is set to be larger as an intake air amount of the internal combustion engine is larger.

3. The exhaust gas purification system according to claim 1 or 2, wherein the rich spike execution means executes the rich spike control when an increase rate of the intake air amount of the internal combustion engine is equal to or smaller than a predetermined air increase rate and an integrated amount of an increase amount of the fuel injection amount within a predetermined time has totaled to at least a predetermined integrated amount.

4. The exhaust gas purification system according to claim 3, wherein the predetermined integrated amount is set to be larger as the intake air amount of the internal combustion engine is larger.

5. The exhaust gas purification system according to claim 1 or 2, wherein the fuel injection amount is an amount of fuel injected in primary fuel injection, and if the intake air amount of the internal combustion engine is equal to or exceeds a predetermined air amount before the rich spike control executed by the rich spike execution means, secondary fuel injection is executed in the internal combustion engine at a timing later than the primary fuel injection such that the fuel injected by the secondary fuen injection is combusted.

6. The exhaust gas purification system according to any one of claims 1 and 5, wherein the fuel supply means is a fuel addition valve disposed in the exhaust passage, and the rich spike execution means controls the fuel addition valve to add fuel to the exhaust gas.

7. The exhaust gas purification system according to any one of claims 1 and 5, wherein the fuel supply means is a fuel injection valve which injects fuel in a cylinder, and the rich spike execution means contols the fuel injection valve to exexute an additional fuel injection at a timing later than the primary fuel injection such that the fuel injected by the fuel injection valve is not combusted but discharged from the cylinder so as to be added to the exhaust gas.

8. A control method for an exhaust gas purification system for an internal combustion engine, the system including an NOx storage reduction catalyst (10) provided in an exhaust passage of the internal combustion engine, and fuel supply means (11) for supplying fuel to an exhaust gas at a position upstream of the NOx storage reduction catalyst, the method comprising the step of:
executing rich spike control in which an air-fuel ratio of the exhaust gas flowing into the NOx storage reduction catalyst is lowered to a target rich air-fuel ratio, by supplying fuel to the exhaust gas by means of the fuel supply means, when a fuel injection amount is increased by at least a predetermined fuel increase amount at at least a predetermined fuel increase rate, wherein an oxide stored in the NOx storage reduction catalyst is reduced by lowering the air-fuel ratio of the exhaust gas to the target rich air-fuel ratio.

9. The method according to claim 8, wherein the predetermined fuel increase amount is set to be larger as an intake air amount of the internal combustion engine is larger.

10. The method according to claim 8 or 9, further comprising the step of:
executing the rich spike control when an increase rate of the intake air amount of the internal combustion engine is smaller than a predetermined air increase rate and an integrated amount of an increase amount of the fuel injection amount within a predetermined time has totaled to a predetermined integrated amount or more.

11. The method according to claim 10, wherein the predetermined integrated amount is set to be larger as the intake air amount of the internal combustion engine is larger.

12. The method according to claim 8 or 9, further comprising the step of:
if the fuel injection amount is an amount of fuel injected in primary fuel injection, and if the intake air amount of the internal combustion engine is a predetermined air amount or more during the rich spike control executed in the rich spike execution step, executing secondary fuel injection in the internal combustion engine at a timing later than the primary fuel injection and when the injected fuel is combusted.
